# EUROPÄISCHE PATENTSCHRIFT

(11) **EP 2 878 522 B1**
(45) Veröffentlichungstag und Bekanntmachung des Hinweises auf die Patenterteilung: **16.08.2017**
(21) Anmeldenummer: 13194840.8
(22) Anmeldetag: 28.11.2013
(51) Int. Cl.: B62D 65/06

(54) **Verfahren zur Montage einer Tür an einer Fahrzeugkarosserie**
Method for mounting a door on a vehicle body
Procédé de montage d'un ouvrant sur une carrosserie de véhicule

(43) Veröffentlichungstag der Anmeldung: 03.06.2015
(73) Patentinhaber: Siemens Aktiengesellschaft, 80333 München (DE)
(72) Erfinder: Müller, Patrick, 07338 Drognitz (DE); Ziermann, Horst, 07407 Rudolstadt (DE)

(56) Entgegenhaltungen:
- EP-A1- 2 409 810
- EP-A1- 2 463 182
- DE-A1- 10 026 192
- DE-A1- 10 356 808

## Beschreibung

Bei herkömmlichen Verfahren zur robotergeführten, automatisierten Montage von Anbauteilen an Fahrzeugkarosserien wird eine Fahrzeugkarosserie mittels eines Fördersystems zunächst in einen Fertigungsbereich gefahren, in den auch die Anbauteile mittels Aufbewahrungseinrichtungen bzw. Behältern zugeführt werden. Anbauteile sind beispielsweise Motorhauben, Heckklappen, Kotflügel oder Türen. Während der Anbauteilmontage werden die Anbauteile mittels eines Roboters aus dem jeweiligen Behälter entnommen und an der Fahrzeugkarosserie montiert.

In DE 37 26 292 C1 ist ein Verfahren zur Montage von Fahrzeugtüren mit einem eine tragende Struktur bildenden Türkörper beschrieben, in dessen Hohlraum ein am Türkörper befestigter Aggregateträger zur Aufnahme von Tür-Einbauaggregaten angeordnet ist. Zunächst wird der Türkörper ohne Aggregateträger in dafür vorgesehene karosserieseitige Türöffnungen paßgenaues eingesetzt. Danach wird der eingesetzte Türkörper an definierten Meßpunkten meßtechnisch erfaßt. Dabei ermittelte Meßwerte werden in Beziehung zu weiteren Meßwerten gesetzt, die an karosserieseitigen Meßpunkten in einem Bereich von Türpfosten und Dachrahmen ermittelt werden. Anschließend wird der Türkörper demontiert und zu einer Türen-Montagestation transportiert. Dort wird die Fahrzeugtür durch Einbau des Aggregateträgers sowie weiterer Einbauten unter Zuhilfenahme einer die Meßergebnisse an den Meßpunkten nutzenden Türen-Montagevorrichtung komplettiert. Abschließend erfolgt eine erneute Montage der komplettierten Fahrzeugtür an das in parallelen Arbeitsschritten inzwischen weiter fertiggestellte Fahrzeug.

Aus WO 1996/036525 A1 ist ein Verfahren zum automatischen Einbau eines Bauteiles einer Kraftfahrzeugkarosserie bekannt, bei dem die Kraftfahrzeugkarosserie vor einer Montage des Bauteils automatisch vermessen wird. Danach wird eine erforderliche Einbaulage des Bauteils festgelegt und eine das Einbauteil montierende Montagevorrichtung entsprechend gesteuert. Nach der Montage des Einbauteils wird eine tatsächliche Position des Bauteils in Bezug auf die Kraftfahrzeugkarosserie erneut gemessen. Aus der ermittelten Position des eingebauten Bauteils werden Korrekturdaten für die Montage des entsprechenden Bauteils der nachfolgenden Kraftfahrzeugkarosserie gewonnen.

In DE 103 47 554 A1 ist ein Verfahren zur Montage eines Karosserieteils an einer Karosserie beschrieben, bei dem eine mit ansteuerbaren Aktuatoren versehene Montageeinrichtung verwendet wird. Dabei weist die Montageeinrichtung eine Aufnahme für das Karosserieteil auf. Nach einem Aufnehmen des Karosserieteils mit der Aufnahme wird eine Meßposition des Karosserieteils an der Karosserie angefahren und Spalt- bzw. Fallungsmaße als Ist-Werte an mehreren Meßpunkten mittels optischer Meßsensoren ausgemessen. Anschließend werden die Ist-Werte mit vorgegebenen Soll-Werten verglichen und Korrekturwerte ermittelt. Die Montageeinrichtung wird jeweils um die Korrekturwerte verfahren, solange bis die Ist-Werte mit den Soll-Werten übereinstimmen. Abschließend wird das Karosserieteil an der Karosserie befestigt.

Aus WO 2007/003375 A1 ist ein Verfahren zum Fügen einer ersten Fügestruktur und einer zweiten Fügestruktur bekannt, bei dem ein konturgetreues Modell der ersten Fügestruktur und die zweite Fügestruktur zueinander in einer Fügeposition positioniert werden. Das Modell und die zweite Fügestruktur werden in der Fügeposition relativ zueinander auf Paßgenauigkeit vermessen. An der zweiten Fügestruktur wird in Abhängigkeit von der Messung eine Verbindungseinrichtung zum paßgenauen Verbinden der Fügestrukturen erzeugt oder befestigt.

In DE 10 2006 048030 A1 ist ein Verfahren zur Ermittlung mindestens eines zwei Konturen zugeordneten Spaltmaßes beschrieben, bei dem von einem Bereich mit dem zu untersuchenden Spalt ein dreidimensionales Abbild erzeugt wird. Anschließend werden Meßwerte von den Spalt bestimmenden Konturen geglättet. Ausgehend von einem ersten Meßpunkt auf einer der geglätteten Konturen wird an einer Meßstelle, für die das Spaltmaß zu ermitteln ist, nach einer gespeicherten Anweisung ein zweiter Meßpunkt an der jeweils anderen geglätteten Kontur ermittelt. Zwischen beiden Meßpunkten wird das gesuchte Spaltmaß ermittelt. Zur Erzeugung des dreidimensionalen Abbilds projiziert ein Projektor kodiertes Licht auf einen abzubildenden Bereich. Eine Kamera erfaßt diesen Bereich in einem Farb- oder Grauwertbild, aus dem mit Hilfe von Triangulation ein topografisches Abbild erzeugt wird.

Aus EP 2 423 639 B1 ist ein Verfahren zur Ermittlung von Spaltmaß bzw. Bündigkeit von Karosserieteilen eines Kraftfahrzeugs bekannt, bei dem zueinander auszurichtende Karosserieteile an einer Mehrzahl vorgebbarer Meßbereiche mittels jeweils einer Abtasteinrichtung dreidimensional abgetastet werden. Dabei wird ein 3D-Oberflächen-Profil der Karosserieteile als Meßobjekten vermessen. Die Meßbereiche sind fahrzeugspezifisch parametriert. Die Abtasteinrichtungen werden anhand einer vorgegebenen fahrzeugspezifischen Parametrierung auf zumindest eine Karosseriefuge ausgerichtet. Aus mittels der Abtasteinrichtungen erfaßten Abtastwerten werden den auszurichtenden Karosserieteilen zugeordnete dreidimensionale Flächenelemente innerhalb der Meßbereiche ermittelt. Dabei werden den auszurichtenden Karosserieteilen innerhalb der Meßbereiche zugeordnete dreidimensionale Flächenelemente aus mittels der Abtasteinrichtungen erfaßten Abtastwerten identifiziert. Für die ermittelten dreidimensionalen Flächenelemente werden jeweils Art, Position und Orientierung im Raum ermittelt. Aus Art, Position und Orientierung zumindest zweier benachbarter dreidimensionaler Flächenelemente werden Spaltmaß bzw. Bündigkeit für zumindest zwei zueinander auszurichtende Karosserieteile ermittelt. Die gattungsgemäße EP 2 409 810 A1 betrifft ein Verfahren zur Montage einer Tür an einem Fahrzeug, bei dem wenigstens ein karosserieseitiges Scharnierteil mittels einer ersten Hilfsvorrichtung sowie mit Hilfe eines Referenzpunktsystems an einem Türausschnitt der Fahrzeugkarosserie positioniert und festgelegt wird und bei dem ein mit dem karosserieseitigen Scharnierteil zu verbindendes türseitiges Scharnierteil mittels einer zweiten Hilfsvorrichtung sowie mit Hilfe eines Referenzpunktsystems an der Tür positioniert und befestigt wird. Die karosserieseitigen Scharnierteile sind von der Hilfsvorrichtung an einem Scharnierachsenteilbereich aufgenommen. Weiter sind die türseitigen Scharnierteile mittels der zweiten Hilfsvorrichtung an einem zweiten Scharnierachsenteilbereich aufgenommen. Die Tür wird nach erfolgter Festlegung der türseitigen Scharnierteile ohne weitere Ausrichtung an den jeweils zugeordneten karosserieseitigen Scharnierteilen eingehängt.
Der vorliegenden Erfindung liegt die Aufgabe zugrunde, ein Verfahren zur Montage eines Anbauteils an einer Fahrzeugkarosserie zu schaffen, das ohne fahrzeugtypspezifische Montagevorrichtungen für eine Vielzahl unterschiedlicher Fahrzeugtypen nutzbar ist und reduzierte Montagedurchlaufzeiten ermöglicht.

Diese Aufgabe wird erfindungsgemäß durch ein Verfahren mit den in Patentanspruch 1 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Montage eines Anbauteils an einer Fahrzeugkarosserie werden mehrere karosserieseitige Scharnierhälften jeweils unter Verwendung eines Karosserie-Referenzpunkte umfassenden ersten Referenzpunktsystems an der Fahrzeugkarosserie montiert. Dabei werden die karosserieseitigen Scharnierhälften jeweils hinsichtlich ihrer Anordnung in Fahrzeuglängsachse und in Fahrzeughochachse durch das Referenzpunktsystem festgelegt. Durch Scharnierlöcher oder Scharnierbolzen der karosserieseitigen Scharnierhälften ist eine Schwenkachse des Anbauteils festgelegt. Des weiteren wird zumindest eine Fahrzeugquerachsen-Koordinate der montierten karosserieseitigen Scharnierhälften gemessen. Jeweils unter Verwendung des ersten Referenzpunktsystems und eines Anbauteil-Referenzpunkte umfassenden zweiten Referenzpunktsystems am Anbauteil werden mehrere anbauteilseitige Scharnierhälften montiert. Dabei werden die anbauteilseitigen Scharnierhälften jeweils hinsichtlich ihrer transformierten Anordnung in Fahrzeuglängsachse und in Fahrzeughochachse durch das zweite Referenzpunktsystem festgelegt. Unter transformierter Anordnung kann in diesem Zusammenhang beispielsweis eine Bezugnahme auf einen endmontierten, geschlossenen Zustand des Anbauteils subsumiert werden.

Aus der gemessenen Fahrzeugquerachsen-Koordinate der karosserieseitigen Scharnierhälften wird erfindungsgemäß zumindest ein Korrekturwert für die anbauteilseitigen Scharnierhälften hinsichtlich ihrer transformierten Anordnung in Fahrzeugquerachse ermittelt. Dabei werden die anbauteilseitigen Scharnierhälften unter Verwendung des ermittelten Korrekturwerts montiert. Darüber hinaus wird Anbauteil mittels einer Positioniervorrichtung auf einen vorgebbaren Abstand zur Fahrzeugkarosserie an eine Meßposition bewegt. An der Meßposition werden Position sowie Orientierung von Scharnierbolzen oder Scharnierlöchern der anbauteilseitigen Scharnierhälften ermittelt und mit Position sowie Orientierung korrespondierender Scharnierlöcher oder Scharnierbolzen der karosserieseitigen Scharnierhälften verglichen. Anhand eines Vergleichsergebnisses wird das Anbauteil mittels der Positioniervorrichtung mit seinen anbauteilseitigen Scharnierhälften an den an der Fahrzeugkarosserie montierten karosserieseitigen Scharnierhälften eingehängt.

Aufgrund einer Festlegung der Anordnung des Anbauteils in Relation zur Fahrzeugkarosserie über eine koordinierte Positionierung der karosserieseitigen und der anbauteilseitigen Scharnierhälften kann ein Vermessen des Anbauteils an der Fahrzeugkarosserie hinsichtlich Spaltmaß und Bündigkeit sowie eine ggf. erforderliche Korrektur der Anordnung entfallen. Hieraus ergibt sich eine erhebliche Zeitersparnis. Da anbauteileseitige Scharniermontagepositionen durch das zweite Referenzpunktsystem am Anbauteil festgelegt sind, ist es nicht erforderlich, daß die Positioniervorrichtung das Anbauteil hochpräzise aufnimmt. Aus diesem Grund kann grundsätzlich eine Universal-Positioniervorrichtung für mehrere unterschiedliche Fahrzeugtypen verwendet werden.

Beispielweise kann die Positioniervorrichtung eine Saug-Greifer-Einheit zur Aufnahme des Anbauteils umfassen und damit zur Aufnahme einer Vielzahl unterschiedlicher Anbauteile ausgestaltet sein. Vorzugsweise wird das Anbauteil bereits vor Montage der anbauteilseitigen Scharnierhälften mittels der Positioniervorrichtung aus einer Bauteilaufbewahrungsvorrichtung aufgenommen. Auf diese Weise kann die Anzahl verwendeter Montagevorrichtungen minimiert werden. Hieraus resultieren wiederum reduzierte Rüstzeiten. Entsprechend einer bevorzugten Ausgestaltung der vorliegenden Erfindung ist die Saug-Greifer-Einheit in Fahrzeuglängsachse und in Fahrzeughochachse verstellbar. Dabei wird durch eine Verstellung der Saug-Greifer-Einheit in Fahrzeuglängsachse und in Fahrzeughochachse eine Lage des Anbauteils in Bezug auf die Positioniervorrichtung festgelegt. Dies erleichtert eine gezielte Positionierung des Anbauteils.

Vorzugsweise sind pro Anbauteil jeweils 2 Scharniere vorgesehen. Dabei werden beide karosserieseitigen Scharnierhälften vor ihrer Montage gemeinsam mittels einer ersten Greifereinheit entsprechend der Schwenkachse des Anbauteils aufgenommen und an der Fahrzeugkarosserie in einer Montageposition positioniert. Außerdem werden vorzugsweise beide anbauteilseitigen Scharnierhälften vor ihrer Montage gemeinsam mittels einer zweiten Greifereinheit entsprechend der Schwenkachse des Anbauteils aufgenommen und am Anbauteil in einer Montageposition positioniert. Dies ermöglicht eine schnelle und genaue Montage der karosserieseitigen bzw. anbauteilseitigen Scharnierhälften.

Die karosserieseitigen Scharnierhälften werden entsprechend einer vorteilhaften Weiterbildung des erfindungsgemäßen Verfahrens jeweils mittels einer ersten von einer Karosserieinnenseite eingeführten Schraube und einer zweiten anschließend von einer Karosserieaußenseite eingeführten Schraube an der Fahrzeugkarosserie montiert. Dies ermöglicht im Vergleich zu einer primären Außenverschraubung eine reduzierte Belastung auf die karosserieseitigen Scharnierhälften und damit eine geringere Gefahr einer De-Justierung der karosserieseitigen Scharnierhälften während ihrer Montage an der Fahrzeugkarosserie. Die anbauteilseitigen Scharnierhälften werden vorzugsweise jeweils mittels genau einer von außen eingeführten Schraube am Anbauteil montiert.

Entsprechend einer besonders bevorzugten Ausgestaltung des erfindungsgemäßen Verfahrens weisen die karosserieseitigen Scharnierhälften Scharnierlöcher auf, während die anbauteilseitigen Scharnierhälften Scharnierbolzen aufweisen. Dies ermöglicht ein besonders einfaches Einhängen des Anbauteilteils zur Montage an der Fahrzeugkarosserie. Vorzugsweise werden Position sowie Orientierung der montierten karosserieseitigen Scharnierhälften mittels jeweils eines oberhalb einer erwarteten Montageposition neben der Fahrzeugkarosserie angeordneten Sensors abgetastet werden. Dies ermöglicht eine besonders zuverlässige Erfassung der Montagepositionen der karosserieseitigen Scharnierhälften. Vorteilhafterweise werden Position sowie Orientierung der montierten anbauteilseitigen Scharnierhälften an der Meßposition vor Einhängen des Anbauteils an der Fahrzeugkarosserie mittels jeweils eines in Höhe einer erwarteten Meßposition neben der Fahrzeugkarosserie angeordneten Sensors abgetastet. Dies ermöglicht eine platzsparende Anordnung der Sensoren zur Vermessung der karosserie- und anbauteilseitigen Scharnierhälften.

Die vorliegende Erfindung wird nachfolgend an einem Ausführungsbeispiel anhand der Zeichnung näher erläutert. Es zeigt
- Figur 1: ein Ablaufdiagramm zur Durchführung eines Verfahrens zur Montage eines Anbauteils an einer Fahrzeugkarosserie

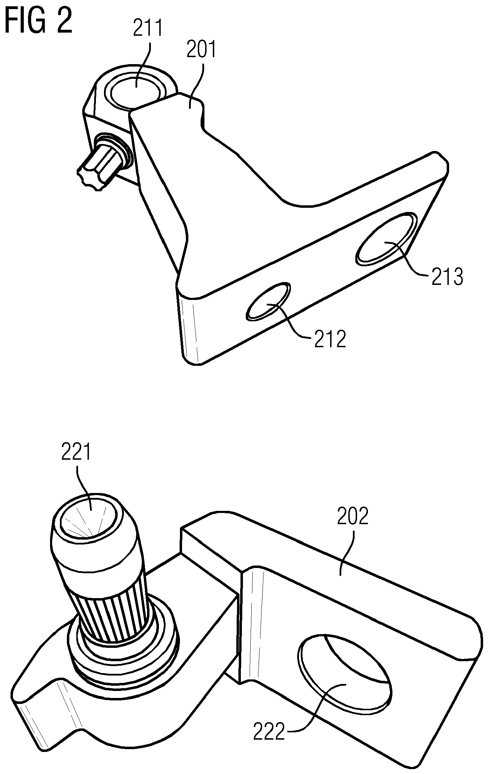

- Figur 2: eine karosserieseitige und eine anbauteilseitige Scharnierhälfte,
- Figur 3: eine Anordnung von Sensoren zur Abtastung von Position und Orientierung montierter karosserieseitiger Scharnierhälften,
- Figur 4: eine Anordnung von Sensoren zur Abtastung von Position und Orientierung montierter anbauteilseitiger Scharnierhälften,
- Figur 5: eine Positioniervorrichtung zur Aufnahme von Anbauteilen und deren Montage an Fahrzeugkarosserien.

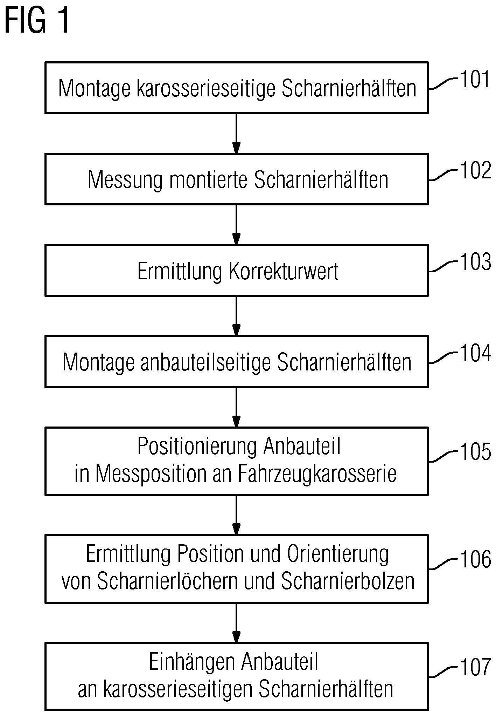

Entsprechend dem in Figur 1 dargestellten Ablaufdiagramm werden zur Montage eines Anbauteils an einer Fahrzeugkarosserie zunächst mehrere karosserieseitige Scharnierhälften jeweils unter Verwendung eines Karosserie-Referenzpunkte umfassenden ersten Referenzpunktsystems an der Fahrzeugkarosserie montiert (Schritt 101). Die karosserieseitigen Scharnierhälften werden jeweils hinsichtlich ihrer Anordnung in Fahrzeuglängsachse und in Fahrzeughochachse durch das Referenzpunktsystem festgelegt. Dabei ist durch Scharnierlöcher oder Scharnierbolzen der karosserieseitigen Scharnierhälften eine Schwenkachse des Anbauteils festgelegt.

Entsprechend Schritt 102 wird nachfolgend zumindest eine Fahrzeugquerachsen-Koordinate der montierten karosserieseitigen Scharnierhälften gemessen. Aus der gemessenen Fahrzeugquerachsen-Koordinate der karosserieseitigen Scharnierhälften wird zumindest ein Korrekturwert für zugeordnete anbauteilseitige Scharnierhälften hinsichtlich ihrer transformierten Anordnung in Fahrzeugquerachse ermittelt (Schritt 103). Anschließend werden mehrere anbauteilseitige Scharnierhälften jeweils unter Verwendung des ersten Referenzpunktsystems und eines Anbauteil-Referenzpunkte umfassenden zweiten Referenzpunktsystems am Anbauteil montiert (Schritt 104). Die anbauteilseitigen Scharnierhälften werden jeweils hinsichtlich ihrer transformierten Anordnung in Fahrzeuglängsachse und in Fahrzeughochachse durch das zweite Referenzpunktsystem festgelegt. Außerdem werden die anbauteilseitigen Scharnierhälften unter Verwendung des entsprechend Schritt 103 ermittelten Korrekturwerts montiert.

Nach Montage der anbauteilseitigen Scharnierhälften wird das Anbauteil mittels einer Positioniervorrichtung auf einen vorgebbaren Abstand zur Fahrzeugkarosserie an eine Meßposition bewegt (Schritt 105), An der Meßposition werden entsprechend Schritt 106 Position sowie Orientierung von Scharnierbolzen oder Scharnierlöchern der anbauteilseitigen Scharnierhälften ermittelt und mit Position sowie Orientierung korrespondierender Scharnierlöcher oder Scharnierbolzen der karosserieseitigen Scharnierhälften verglichen. Abschließend wird das Anbauteil anhand eines Vergleichsergebnisses mittels der Positioniervorrichtung mit seinen anbauteilseitigen Scharnierhälften an den an der Fahrzeugkarosserie montierten karosserieseitigen Scharnierhälften eingehängt (Schritt 107).

Im vorliegenden Ausführungsbeispiel sind pro Anbauteil jeweils 2 Scharniere vorgesehen. Vorteilhafterweise werden beide karosserieseitigen Scharnierhälften vor ihrer Montage gemeinsam mittels einer ersten Greifereinheit entsprechend der Schwenkachse des Anbauteils aufgenommen und an der Fahrzeugkarosserie in einer Montageposition positioniert werden. Analog dazu werden beide anbauteilseitigen Scharnierhälften vorzugsweise vor ihrer Montage gemeinsam mittels einer zweiten Greifereinheit entsprechend der Schwenkachse des Anbauteils aufgenommen und am Anbauteil in einer Montageposition positioniert.

Entsprechend einer bevorzugten Ausführungsform weisen die karosserieseitigen Scharnierhälften 201 Scharnierlöcher 211 auf, während die anbauteilseitigen Scharnierhälften 202 Scharnierbolzen 221 aufweisen. Dabei werden die karosserieseitigen Scharnierhälften 201 jeweils mittels einer ersten von einer Karosserieinnenseite eingeführten Schraube und einer zweiten anschließend von einer Karosserieaußenseite eingeführten Schraube an der Fahrzeugkarosserie montiert. Für die erste Schraube ist daher an den karosserieseitigen Scharnierhälften 201 jeweils eine Gewindebohrung 212 vorgesehen, während die karosserieseitigen Scharnierhälften 201 für die zweite Schraube jeweils eine Durchgangsbohrung 213 aufweisen. Die anbauteilseitigen Scharnierhälften 202 werden vorzugsweise jeweils mittels genau einer Schraube am Anbauteil montiert. Hierzu weisen die anbauteilseitigen Scharnierhälften 202 jeweils eine Durchgangsbohrung 222 auf.

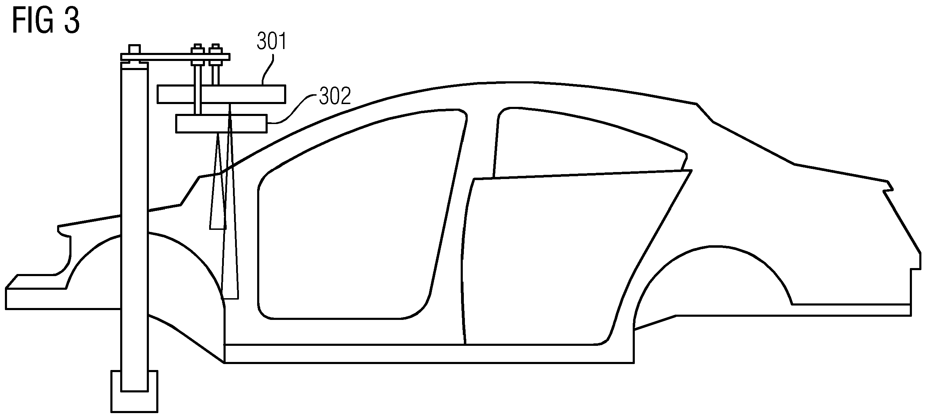

Die in Figur 3 dargestellte Anordnung von Sensoren zur Abtastung von Position und Orientierung montierter karosserieseitiger Scharnierhälften umfaßt für eine parallele Erfassung beider karosserieseitiger Scharnierhälften jeweils einen Sensor 301, 302 zur Abtastung einer zugeordneten Scharnierhälfte. Position sowie Orientierung der montierten karosserieseitigen Scharnierhälften werden mittels des jeweils oberhalb einer erwarteten Montageposition neben der Fahrzeugkarosserie angeordneten Sensors 301, 302 abgetastet.

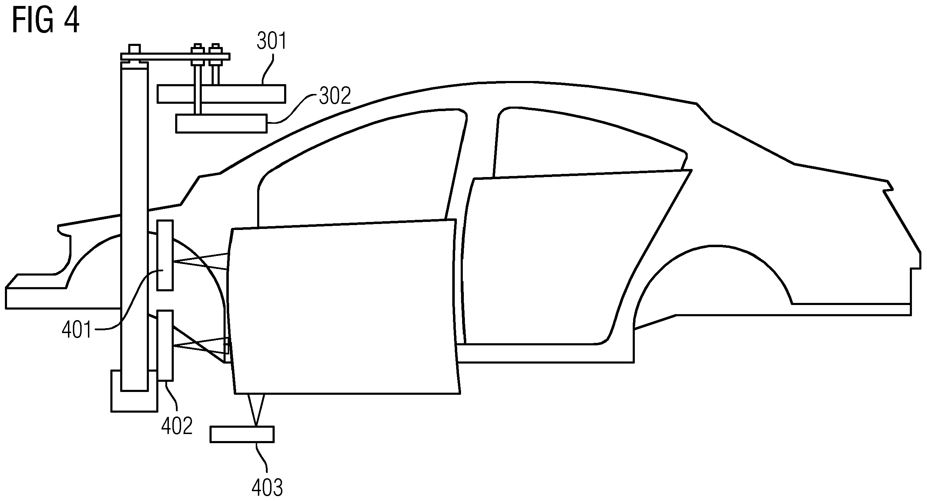

Im Vergleich zu der in Figur 3 dargestellten Anordnung ist die Anordnung gemäß Figur 4 um Sensoren 401-403 zur Abtastung von Position und Orientierung montierter anbauteilseitiger Scharnierhälften ergänzt. Für eine parallele Erfassung beider anbauteilseitiger Scharnierhälften ist jeweils ein Sensor 401, 402 zur Abtastung einer zugeordneten Scharnierhälfte vorgesehen. Position sowie Orientierung der montierten anbauteilseitigen Scharnierhälften an der Meßposition vor Einhängen des Anbauteils an der Fahrzeugkarosserie werden mittels des jeweils in Höhe einer erwarteten Meßposition neben der Fahrzeugkarosserie angeordneten Sensors 401, 402 abgetastet. Ein zusätzlicher Sensor 403 ist zur Abtastung einer Unterkante des Anbauteils als Referenzmerkmal vorgesehen und dementsprechend an einer erwarteten Meßposition unterhalb der Fahrzeugkarosserie angeordnet.

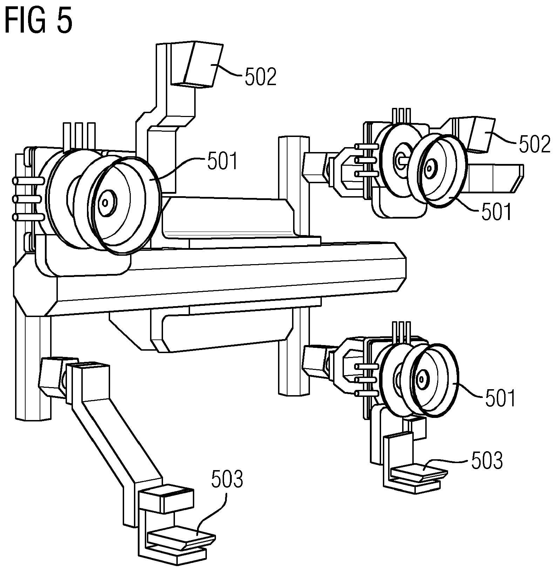

Die in Figur 5 dargestellte Positioniervorrichtung zur Aufnahme von Anbauteilen und deren Montage an Fahrzeugkarosserien umfaßt eine Saug-Greifer-Einheit zur Aufnahme des Anbauteils, die mehrere auf eine Außenkontur des Anbauteils ausrichtbare Saugelemente 501 und mehrere Stütz- 502 bzw. Trageelemente 503 aufweist. Die Stützelemente 502 wirken mit den Saugelementen 501 zusammen und dienen einer Abstützung des durch die Saugelemente 501 angesaugten Anbauteils. Dementsprechend sind die Stützelemente 502 an die Außenkontur des Anbauteils anpaßbar ausgestaltet. Die Tragelemente 503 dienen einer Abstützung des Anbauteils an seiner Unterkante und damit auch einer Lagedefinition des Anbauteils innerhalb der Saug-Greifer-Einheit.

Die Saug-Greifer-Einheit ist in Fahrzeuglängsachse und in Fahrzeughochachse verstellbar. Durch eine Verstellung der Saug-Greifer-Einheit in Fahrzeuglängsachse und in Fahrzeughochachse kann eine Lage des Anbauteils in Bezug auf die Positioniervorrichtung festgelegt werden. Vorzugsweise wird das Anbauteil bereits vor Montage der anbauteilseitigen Scharnierhälften mittels der Positioniervorrichtung aus einer Bauteilaufbewahrungsvorrichtung aufgenommen.

## Patentansprüche

1. Verfahren zur Montage eines Anbauteils an einer Fahrzeugkarosserie, bei dem
- mehrere karosserieseitige Scharnierhälften (201) jeweils unter Verwendung eines Karosserie-Referenzpunkte umfassenden ersten Referenzpunktsystems an der Fahrzeugkarosserie montiert werden (101),
- wobei die karosserieseitigen Scharnierhälften (201) jeweils hinsichtlich ihrer Anordnung in Fahrzeuglängsachse und in Fahrzeughochachse durch das Referenzpunktsystem festgelegt werden und
- wobei durch Scharnierlöcher (211) oder Scharnierbolzen der karosserieseitigen Scharnierhälften (201) eine Schwenkachse des Anbauteils festgelegt ist,
- zumindest eine Fahrzeugquerachsen-Koordinate der montierten karosserieseitigen Scharnierhälften (201) gemessen wird (102),
**dadurch gekennzeichnet, dass**
- mehrere anbauteilseitige Scharnierhälften (202) jeweils unter Verwendung des ersten Referenzpunktsystems und eines Anbauteil-Referenzpunkte umfassenden zweiten Referenzpunktsystems am Anbauteil montiert werden (104),
- wobei die anbauteilseitigen Scharnierhälften (202) jeweils hinsichtlich ihrer transformierten Anordnung in Fahrzeuglängsachse und in Fahrzeughochachse durch das zweite Referenzpunktsystem festgelegt werden,
- wobei die transformierte Anordnung eine Bezugnahme auf einen endmontierten, geschlossenen Zustand des Anbauteils umfasst,
- wobei aus der gemessenen Fahrzeugquerachsen-Koordinate der karosserieseitigen Scharnierhälften (201) zumindest ein Korrekturwert für die anbauteilseitigen Scharnierhälften (202) hinsichtlich ihrer transformierten Anordnung in Fahrzeugquerachse ermittelt wird (103) und
- wobei die anbauteilseitigen Scharnierhälften (202) unter Verwendung des ermittelten Korrekturwerts montiert werden,
- das Anbauteil mittels einer Positioniervorrichtung auf einen vorgebbaren Abstand zur Fahrzeugkarosserie an eine Meßposition bewegt wird (105),
- an der Meßposition Position sowie Orientierung von Scharnierbolzen oder Scharnierlöchern der anbauteilseitigen Scharnierhälften ermittelt und mit Position sowie Orientierung korrespondierender Scharnierlöcher oder Scharnierbolzen der karosserieseitigen Scharnierhälften verglichen werden (106),
- das Anbauteil anhand eines Vergleichsergebnisses mittels der Positioniervorrichtung mit seinen anbauteilseitigen Scharnierhälften an den an der Fahrzeugkarosserie montierten karosserieseitigen Scharnierhälften eingehängt wird (107).

2. Verfahren nach Anspruch 1,
bei dem pro Anbauteil jeweils 2 Scharniere vorgesehen sind, und bei dem beide karosserieseitigen Scharnierhälften (201) vor ihrer Montage gemeinsam mittels einer ersten Greifereinheit entsprechend der Schwenkachse des Anbauteils aufgenommen und an der Fahrzeugkarosserie in einer Montageposition positioniert werden und bei dem beide anbauteilseitigen Scharnierhälften (202) vor ihrer Montage gemeinsam mittels einer zweiten Greifereinheit entsprechend der Schwenkachse des Anbauteils aufgenommen und am Anbauteil in einer Montageposition positioniert werden.

3. Verfahren nach einem der Ansprüche 1 oder 2,
bei dem die Positioniervorrichtung eine Saug-Greifer-Einheit zur Aufnahme des Anbauteils umfaßt.

4. Verfahren nach Anspruch 3,
bei dem das Anbauteil bereits vor Montage der anbauteilseitigen Scharnierhälften (202) mittels der Positioniervorrichtung aus einer Bauteilaufbewahrungsvorrichtung aufgenommen wird.

5. Verfahren nach Anspruch 4,
bei dem die Saug-Greifer-Einheit in Fahrzeuglängsachse und in Fahrzeughochachse verstellbar ist und bei dem durch eine Verstellung der Saug-Greifer-Einheit in Fahrzeuglängsachse und in Fahrzeughochachse eine Lage des Anbauteils in Bezug auf die Positioniervorrichtung festgelegt wird.

6. Verfahren nach einem der Ansprüche 1 bis 5,
bei dem die karosserieseitigen Scharnierhälften (201) jeweils mittels einer ersten von einer Karosserieinnenseite eingeführten Schraube und einer zweiten anschließend von einer Karosserieaußenseite eingeführten Schraube an der Fahrzeugkarosserie montiert werden.

7. Verfahren nach Anspruch 6,
bei dem die anbauteilseitigen Scharnierhälften (202) jeweils mittels genau einer Schraube am Anbauteil montiert werden.

8. Verfahren nach einem der Ansprüche 1 bis 7,
bei dem die karosserieseitigen Scharnierhälften (201) Scharnierlöcher (211) aufweisen und bei dem die anbauteilseitigen Scharnierhälften (202) Scharnierbolzen (221) aufweisen.

9. Verfahren nach Anspruch 8,
bei dem Position sowie Orientierung der montierten karosserieseitigen Scharnierhälften (201) mittels jeweils eines oberhalb einer erwarteten Montageposition neben der Fahrzeugkarosserie angeordneten Sensors (301, 302) abgetastet werden.

10. Verfahren nach einem der Ansprüche 8 oder 9,
bei dem Position sowie Orientierung der montierten anbauteilseitigen Scharnierhälften (202) an der Meßposition vor Einhängen des Anbauteils an der Fahrzeugkarosserie mittels jeweils eines in Höhe einer erwarteten Meßposition neben der Fahrzeugkarosserie angeordneten Sensors (401, 402) abgetastet werden.

## Claims

1. Method for installing an add-on part on a vehicle body, in which
- a plurality of body hinge halves (201) are installed (101) on the vehicle body, in each case by using a first reference point system comprising body reference points,
- wherein the body hinge halves (201) are each defined with regard to their arrangement in the vehicle longitudinal axis and in the vehicle vertical axis by the reference point system and
- wherein a pivot axis of the add-on part is defined by hinge holes (211) or hinge bolts of the body hinge halves (201),
- at least one vehicle transverse axis coordinate of the installed body hinge halves (201) is measured (102), **characterized in that**
- a plurality of add-on part hinge halves (202) is installed (104) on the add-on part, in each case by using the first reference point system and a second reference point system comprising add-on part reference points,
- wherein the add-on part hinge halves (202) are each defined with regard to their transformed arrangement in the vehicle longitudinal axis and in the vehicle vertical axis by the second reference point system,
- wherein the transformed arrangement comprises a reference to a finally installed, closed state of the add-on part,
- wherein at least one correction value for the add-on part hinge halves (202) with regard to their transformed arrangement in the vehicle transverse axis is determined (103) from the measured vehicle transverse axis coordinate of the body hinge halves (201) and
- wherein the add-on part hinge halves (202) are installed by using the determined correction value,
- the add-on part is moved (105) by means of a positioning device to a measuring position at a predefinable distance from the vehicle body,
- at the measuring position, position and orientation of hinge bolts or hinge holes of the add-on part hinge halves are determined and are compared (106) with position and orientation of corresponding hinge holes or hinge bolts of the body hinge halves,
- by using a comparison result, the add-on part is suspended (107) by means of the positioning device with its add-on part hinge halves on the body hinge halves installed on the vehicle body.

2. Method according to Claim 1,
in which in each case 2 hinges are provided per add-on part, and in which, before their installation, both body hinge halves (201) are picked up jointly by means of a first gripper unit in accordance with the pivot axis of the add-on part and are positioned on the vehicle body in an installation position, and in which, before their installation, both add-on part hinge halves (202) are picked up jointly by means of a second gripper unit in accordance with the pivot axis of the add-on part and are positioned on the add-on part in an installation position.

3. Method according to either of Claims 1 and 2,
in which the positioning device comprises a suction gripper unit for picking up the add-on part.

4. Method according to Claim 3,
in which the add-on part is picked up from a component storage device by means of the positioning device even before the installation of the add-on part hinge halves (202).

5. Method according to Claim 4,
in which the suction gripper unit is adjustable in the vehicle longitudinal axis and in the vehicle vertical axis, and in which, by adjusting the suction gripper unit in the vehicle longitudinal axis and in the vehicle vertical axis, a position of the add-on part in relation to the positioning device is defined.

6. Method according to one of Claims 1 to 5,
in which the body hinge halves (201) are each installed on the vehicle body by means of a first screw inserted from a body inner side and a second screw subsequently inserted from a body outer side.

7. Method according to Claim 6,
in which the add-on part hinge halves (202) are each mounted on the add-on part by means of exactly one screw.

8. Method according to one of Claims 1 to 7,
in which the body hinge halves (201) have hinge holes (211), and in which the add-on part hinge halves (202) have hinge bolts (221).

9. Method according to Claim 8,
in which position and orientation of the installed body hinge halves (201) are in each case scanned by means of a sensor (301, 302) arranged beside the vehicle body above an expected installation position.

10. Method according to either of Claims 8 and 9,
in which position and orientation of the installed add-on part hinge halves (202) at the measuring position before the suspension of the add-on part on the vehicle body are in each case scanned by means of a sensor (401, 402) arranged beside the vehicle body at the height of an expected measuring position.

## Revendications

1. Procédé de montage d'une partie rapportée sur une carrosserie de véhicule, dans lequel
- on monte (101), sur la carrosserie du véhicule, plusieurs moitiés (201) de charnière du côté de la carrosserie, chacune en utilisant un premier système de points de référence comprenant des points de référence de carrosserie,
- dans lequel on fixe, par le système de points de référence, les moitiés (201) de charnière du côté de la carrosserie, chacune en ce qui concerne leur position dans l'axe longitudinal du véhicule et dans l'axe vertical du véhicule et
- dans lequel un axe de pivotement de la partie rapportée est fixé par des charnons (211) de charnière ou par des broches de charnière des moitiés (201) de charnière du côté de la carrosserie,
- on mesure (102) au moins une coordonnée d'axe transversal de véhicule des moitiés (201) de charnière montées du côté de la carrosserie,
**caractérisé en ce que**
- on monte (104) sur la partie rapportée plusieurs moitiés (202) de charnière du côté de la partie rapportée, chacune en utilisant le premier système de points de référence et un deuxième système de points de référence comprenant des points de référence de partie rapportée,
- dans lequel on fixe, par le deuxième système de points de référence, des moitiés (202) de charnière du côté de la partie rapportée, chacune en ce qui concerne sa position transformée dans l'axe longitudinal du véhicule et dans l'axe vertical du véhicule,
- dans lequel la position transformée comprend une relation à un état fermé et fini de montage de la partie rapportée,
- dans lequel, à partir des coordonnées d'axe transversal du véhicule, qui ont été mesurées des moitiés (201) de charnière du côté de la carrosserie, on détermine (103) au moins une valeur de correction pour les moitiés (202) de charnière du côté de la partie rapportée, en ce qui concerne leur position transformée dans l'axe transversal du véhicule et
- dans lequel on monte les moitiés (202) de charnière au côté de la partie rapportée en utilisant la valeur de correction déterminée,
- on met (105) la partie rapportée au moyen d'un dispositif de mise en position en une position de mesure à une distance pouvant être donnée à l'avance de la carrosserie du véhicule,
- dans la position de mesure, on détermine une position, ainsi qu'une orientation, de broches de charnière ou de charnons des moitiés de charnière du côté de la partie rapportée et on les compare (106) à une position, ainsi qu'à une orientation, de charnons ou de broches de charnière correspondant de moitiés de charnière du côté de la carrosserie,
- on suspend (107) la partie rapportée à l'aide d'un résultat de comparaison, au moyen du dispositif de mise en position par ses moitiés de charnière du côté de la partie rapportée aux moitiés de charnière du côté de la carrosserie montées sur la carrosserie du véhicule.

2. Procédé suivant la revendication 1,
dans lequel il est prévu, par partie rapportée, respectivement deux charnières et dans lequel on prend, conformément à l'axe de pivotement de la partie rapportée, les deux moitiés (201) de charnière du côté de la carrosserie, avant leur montage, conjointement au moyen d'une première unité de préhension et on les met en une position du montage sur la carrosserie du véhicule et dans lequel on prend, conformément à l'axe de pivotement de la partie rapportée, les deux moitiés (202) de charnière du côté de la partie rapportée, avant leur montage, conjointement au moyen d'une deuxième unité de préhension et on les met en une position de montage sur la partie rapportée.

3. Procédé suivant l'une des revendications 1 ou 2,
dans lequel le dispositif de mise en position comprend une unité de préhension par aspiration pour prendre la partie rapportée.

4. Procédé suivant la revendication 3,
dans lequel la partie rapportée est prise dans un dispositif de stockage de parties rapportées, dès avant le montage des moitiés (202) de charnière du côté de la partie rapportée, au moyen du dispositif de mise en position.

5. Procédé suivant la revendication 4,
dans lequel l'unité de préhension par aspiration est réglable dans l'axe longitudinal du véhicule et dans l'axe vertical du véhicule et dans lequel on fixe une position de la partie rapportée par rapport au dispositif de mise en position par un déplacement de l'unité de préhension par aspiration suivant l'axe longitudinal du véhicule et l'axe vertical du véhicule.

6. Procédé suivant l'une des revendications 1 à 5,
dans lequel on monte, sur la carrosserie du véhicule, les moitiés (201) de charnière du côté de la carrosserie, chacune au moyen d'une première vis introduite par un côté intérieur de la carrosserie et d'une deuxième vis introduite ensuite d'un côté extérieur de la carrosserie.

7. Procédé suivant la revendication 6,
dans lequel on monte, sur la partie rapportée, les moitiés (202) de charnière du côté de la partie rapportée, chacune au moyen d'exactement une vis.

8. Procédé suivant l'une des revendications 1 à 7,
dans lequel les moitiés (201) de charnière du côté de la carrosserie ont des charnons (211) et dans lequel les moitiés (202) de charnière du côté de la partie rapportée ont des broches (221) de charnière.

9. Procédé suivant la revendication 8,
dans lequel on détecte la position, ainsi que l'orientation, des moitiés (201) de charnière montées du côté de la carrosserie au moyen respectivement d'un capteur (301, 302) monté à côté de la carrosserie du véhicule au-dessus d'une position de montage escomptée.

10. Procédé suivant l'une des revendications 8 ou 9,
dans lequel on détecte la position, ainsi que l'orientation, des moitiés (202) de charnière montées du côté de la partie rapportée en la position de mesure, avant de suspendre la partie rapportée à la carrosserie du véhicule, au moyen respectivement d'un capteur (401, 402) monté à côté de la carrosserie du véhicule au niveau d'une position de mesure escomptée.
